## Europäisches Patentamt
## European Patent Office
## Office européen des brevets

(11) Veröffentlichungsnummer: **0 231 558**
**B1**

(12) **EUROPÄISCHE PATENTSCHRIFT**

(45) Veröffentlichungstag der Patentschrift:
16.05.90

(51) Int. Cl.⁵: **B01D 63/08,** B01D 53/22

(21) Anmeldenummer: **86202375.1**

(22) Anmeldetag: **23.12.86**

(54) Trennvorrichtung.

(30) Priorität: **23.01.86 DE 3601909**

(43) Veröffentlichungstag der Anmeldung:
**12.08.87 Patentblatt 87/33**

(45) Bekanntmachung des Hinweises auf die Patenterteilung:
**16.05.90 Patentblatt 90/20**

(84) Benannte Vertragsstaaten:
**AT BE DE FR IT NL**

(56) Entgegenhaltungen:
**DE-A- 2 344 632**
**FR-A- 2 127 155**
**GB-A- 655 075**
**US-A- 3 984 324**

(73) Patentinhaber: **METALLGESELLSCHAFT AG,**
**Reuterweg 14 Postfach 3724, D-6000 Frankfurt/M.1(DE)**

(72) Erfinder: **Sander, Ulrich, Dr., Taunusstrasse 116,**
**D-6382 Friedrichsdorf(DE)**

(74) Vertreter: **Rieger, Harald, Dr., Reuterweg 14,**
**D-6000 Frankfurt a.M.(DE)**

ACTORUM AG

## Beschreibung

Die Erfindung bezieht sich auf eine Vorrichtung zur Abtrennung einzelner Komponenten aus strömenden fluiden Gemischen mittels selektiv durchlässigem, flächigem Material durch Pervaporation, Gaspermeation, Umkehrosmose oder Ultrafiltration, bestehend im wesentlichen aus einem unter Verwendung handelsüblicher Platinen von Plattenwärmetauschern aufgebauten Stapel von im wesentlichen rechteckigen und in ihrer äußeren Kontur übereinstimmenden, flächigen Bauteilen, die mittels Zugankern zwischen End-Platten randseitig abdichtend zusammengepreßt sind und die innenliegende flache Strömungsnutzräume sowie in den vier Eckbereichen liegende Zu- und Abfuhrkanäle aufweisen.

Bei der Pervaporation besteht das selektiv durchlässige Material aus einer sehr dünnen, porenfreien Kunststoffmembran, deren Matrix derartig gestaltet ist, daß sie für eine Komponente eines Flüssigkeitsgemisches eine wesentlich höhere Durchlässigkeit hat als für alle anderen Komponenten. Mit solchen Membranen können in vielen Fällen Trennwirkungen erzielt werden, die mit anderen Methoden nicht oder nur mit erheblich höherem Aufwand möglich sind. So ist beispielsweise in der US-A 4 405 409 vorgeschlagen worden, die Entwässerung von Mischungen aus organischen Flüssigkeiten und Wasser so vorzunehmen, daß der Wassergehalt zuerst durch Destillation und anschließend weiter durch Pervaporation herabgesetzt wird.

Aus FR-A 2 127 155 ist eine Trennvorrichtung bekannt, die mit semipermeablen Membranen arbeitet und zur Filtration, Osmose, Permeation und insbesondere zur Ultrafiltration dient. Die Vorrichtung besteht aus aufeinanderfolgenden Einheiten, wobei jede Einheit eine Membranplatte und eine Verteilplatte aufweist. Die Membranplatte ist hierbei ein vielschichtiges Bauteil.

Für die bekannten Trennverfahren, insbesondere aber für die Pervaporation, sind schon lange selektiv durchlässige Materialien mit spezifizierten Eigenschaften bekannt, ohne daß es bisher in nennenswertem Umfang zu einer Ausnutzung dieser Eigenschaften gekommen ist. Das liegt vor allem daran, daß die für die genannten Trennverfahren entwickelten Vorrichtungen zu aufwendig und/oder zu störanfällig sind.

Für die Pervaporation sind z.B. außer in Wickeltechnik aufgebaute Vorrichtungen auch schon solche bekanntgeworden, die nach dem Konstruktionsprinzip der Filterpressen oder Plattenwärmetauscher aufgebaut sind (vergl. DE-B 2 902 247, DE-A 3 219 869 und DE-A 3 303 910). Dabei sind im wesentlichen gleichartige flächige Bauteile zu einem Stapel verbunden, in dem durch entsprechende Anordnung von Kanallöchern und Dichtungen auch schon alle erforderlichen Verbindungskanäle integriert sind. Soweit ersichtlich, sind die bekannten einschlägigen Vorrichtungen bisher nicht in industriellem Maßstab eingesetzt worden. Bei Ausführungen in Kunststoff dürften die Hauptprobleme darin liegen, daß die flächigen Bauteile bei größeren Abmessungen nicht mit den geforderten engen Toleranzen zu fertigen sind, daß der Werkstoff bei erhöhten Temperaturen keine ausreichende Dauerstandfestigkeit besitzt und unter den zur Erzielung einer befriedigenden Dichtigkeit erforderlichen hohen äußeren Drücken der Zuganker zum Fließen neigt. Ausführungen in Metall werden bisher offenbar deswegen nicht benutzt, weil sie in der Herstellung zu teuer oder nicht ausreichend korrosionsbeständig sind. Außerdem haben die erforderlichen Anpassungen an die unterschiedlichen Funktionen erhebliche Probleme aufgeworfen, die bisher nicht befriedigend gelöst werden konnten.

Es besteht somit die Aufgabe, für die eingangs genannten Trennverfahren eine Vorrichtung zu entwickeln, die allen verfahrensmäßigen Anforderungen genügt, in der Herstellung besonders preisgünstig ist, die flexibel an die verschiedensten Bedingungen angepaßt werden kann, für ein Scale-up zum großtechnischen Einsatz geeignet ist und insbesondere auch die erforderliche Betriebssicherheit aufweist.

Diese Aufgabe wird bei der eingangs genannten Vorrichtung durch die Merkmale gelöst, die das Kennzeichen des Patentanspruchs 1 bilden.

Vorteilhafte Weiterbildungen sind in den Patentansprüchen 2 bis 4 beschrieben.

Weitere Einzelheiten und Vorteile werden anhand der in den Figuren dargestellten Ausführungsbeispiele näher erläutert.

Fig. 1 zeigt eine handelsübliche Platine.
Fig. 1a zeigt einen Teilschnitt nach Fig. 1.
Fig. 2 zeigt eine handelsübliche Dichtung.
Fig. 2a und 2b zeigen Schnitte durch einen die Dichtung nach Fig. 2 ergänzenden Kanalsteg mit Flachdichtung.
Fig. 3 zeigt ein Siebblech.
Fig. 4 zeigt eine Membran.
Fig. 5 zeigt eine Flachdichtung.
Fig. 6 zeigt eine ebene, massive Platine.
Fig. 6a und 6b zeigen Teilansicht und Schnitt durch ein Kanalblech.
Fig. 7 zeigt eine Anschlußplatine.
Fig. 7a und b zeigen Teilansicht und Teilschnitt der Anschlußplatine in vergrößertem Maßstab.
Fig. 8 zeigt die Zusammenstellung der Bauteile zu einem Doppelmodul.

Zum Verständnis des Erfindungsgedankens wird von einer handelsüblichen Ausführungsform von Wärmetauscherplatinen ausgegangen. Eine derartige Platine besteht gemäß Fig. I aus einem ausgestanzten Blechabschnitt, der Kanalbohrungen (7 bis l0) aufweist, die ebenso wie eingeprägten Dichtungssicken (3) (= Doppellinien) umgeben sind, wie der zentrale Strömungsnutzraum (2). Diese Einprägungen definieren die Anordnungsbereiche für Dichtungen (II) und stellen gleichzeitig auf der Rückseite die Auflagefläche für die Dichtungen der benachbarten Platine dar. Der etwa sechseckige Strömungsnutzraum (2) besitzt darüber hinaus eine Riffelprägung (4) (nur teilweise dargestellt), wobei auf beiden Seiten der Platine zickzackförmig verlaufende Halb-Kanäle (5) gebildet werden, die beidseitig von oben nach unten durchgehen. Von den Kanalbohrungen (7 bis l0) gehen außerdem strahlenförmige Einprägungen aus, die ebenfalls Halb-Kanäle (5) definieren und wie auch die übrige Riffelprägung (4) zur gegenseitigen Abstützung der Platinen im eingebauten Zustand dienen (siehe auch Fig. la).

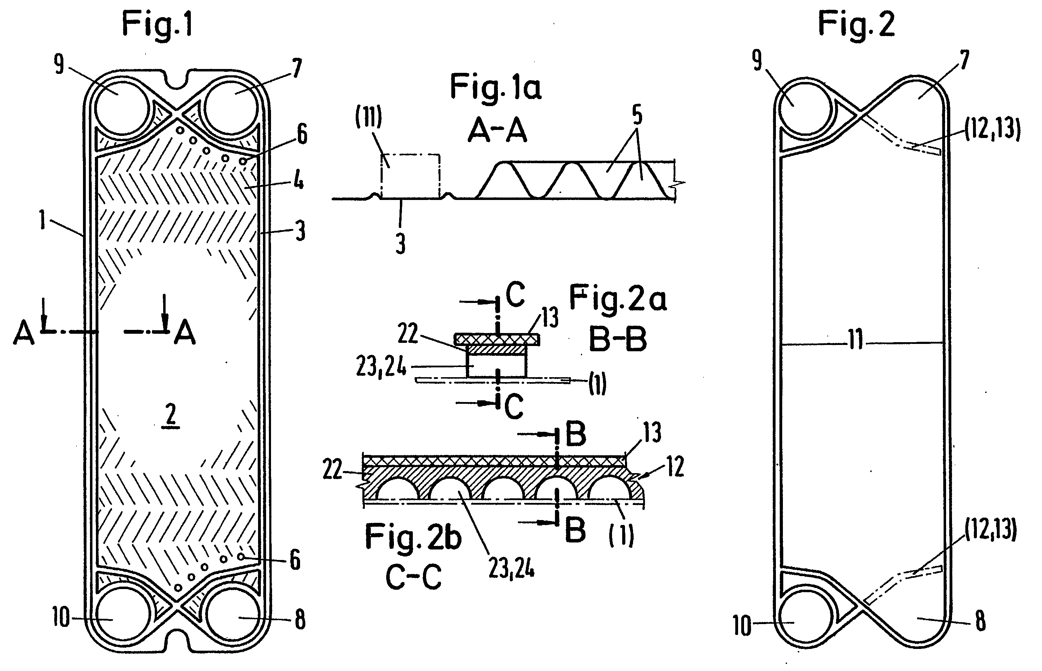

Aus Fig. 2 ist die Form einer handelsüblichen Dichtung (ll) ersichtlich. Ohne den strichpunktiert dargestellten, ergänzenden Kanalsteg (l2) mit Flachdichtung (l3) sperrt diese Dichtung auf der Oberseite der Platine (l) die Kanalbohrungen (9 und l0) gegen den Strömungsnutzraum (2) ab, während von den Kanalbohrungen (7 und 8) her Zugang zum Strömungsnutzraum (2) besteht.

Damit wäre der Strömungsnutzraum (2) auf der Vorderseite der Platine (l) mit einem Zulauf (Kanalbohrung (7) ) und einem Ablauf (Kanalbohrung (8) ) für ein fluides Mittel verbunden, das beispielsweise aufgeheizt werden soll.

Bei herkömmlichem Gebrauch der Platine (l) würde darauf eine in allen Punkten identische Platine (l) folgen, bei der lediglich die Dichtung (ll) spiegelverkehrt eingelegt ist, so daß deren Strömungsnutzraum (2) auf der Vorderseite mit den Kanalbohrungen (9 und 10) in Verbindung stünde, durch die ein Heizmedium zu- und abgeführt werden könnte. Die Platinen bilden dabei die Trennwände zwischen den beiden beteiligten, unterschiedlich fluiden Mitteln.

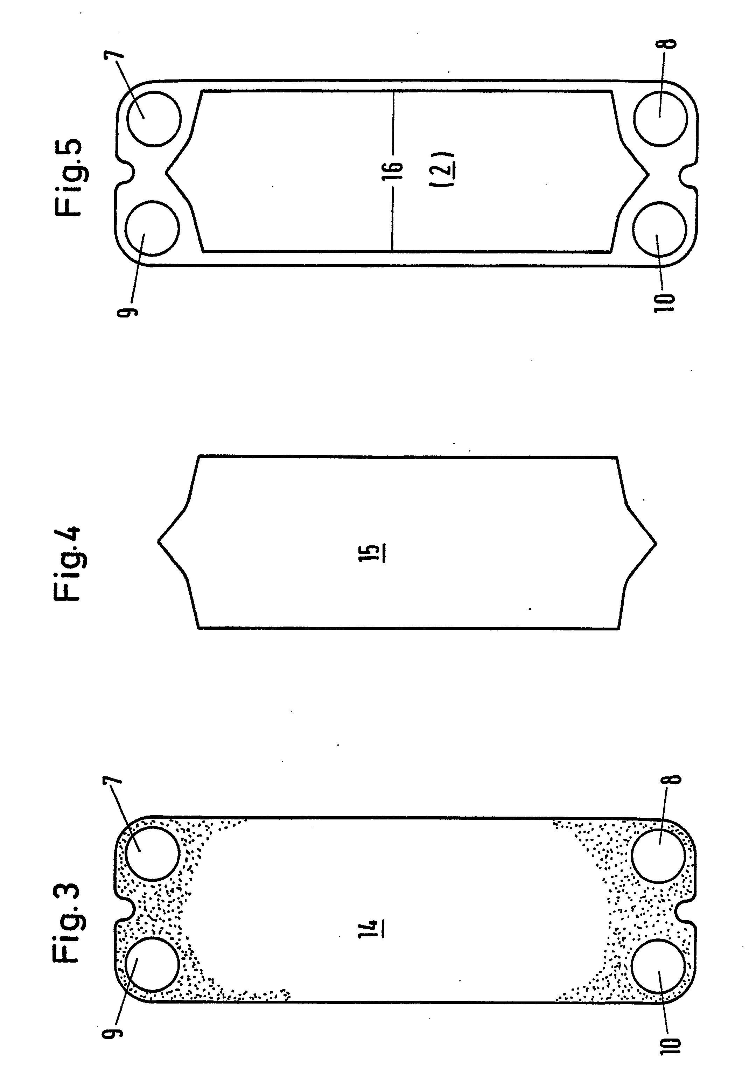

Erfindungsgemäß weist die Platine (l) jedoch eine Mehrzahl von Durchbrechungen (6) auf, wodurch die Strömungsräume (2) der Vorder- und Rückseite der Platine (l) auf der Vorderseite mit den Kanalbohrungen (7 und 8) in Verbindung stehen. Auf der Rückseite der Platine (l) liegt eine Flachdichtung gemäß Fig. 5 auf, die den Strömungsnutzraum (2) gegen alle Kanalbohrungen (7 bis l0) abdichtet.

In der Dichtungssicke (3) zwischen den Durchbrüchen (6) und den Kanalbohrungen (7 und 8) ist die Dichtung (ll) auf der Vorderseite der Platine (l) durch einen Kanalsteg (l2) mit Flachdichtung (l3) gemäß Fig. 2a und b ergänzt. Dadurch wird einerseits in diesem Bereich der Dichtungssicke (3) eine Auflage für das nachfolgend anzuordnende Siebblech (l4) gemäß Fig. 3 geschaffen, andererseits aber der Strömungsweg zwischen dem Strömungsnutzraum (2) und den Kanalbohrungen (7 und 8) nicht unterbrochen.

Der Kanalsteg (l2) besteht aus einem Blechstreifen (22), der auf einer Seite senkrecht zu seiner Längserstreckung eine Mehrzahl von halbkreisförmigen Ausnehmungen (23) aufweist, die in eingebautem Zustand mit der Platine (l) halbkreisförmige Durchtrittskanäle (24) bilden. Der Kanalsteg (l2) und die Flachdichtung (l3) sind auf den bei einer handelsüblichen Dichtung (ll) freibleibenden Bereich der Dichtungssicke (3) abgestimmt und weisen zusammen auch die gleiche Höhe wie eine handelsübliche Dichtung (ll) auf.

Fig. 3 zeigt ein ebenes Siebblech (l4) mit entsprechenden Kanalbohrungen (7 bis l0), wobei die Lochung nur teilweise dargestellt ist.

Aus Fig. 4 ist die Form der Membran (l5) ersichtlich, die aus selektiv durchlässigem Material besteht und allseitig um mindestens die Breite der Dichtungssicke (3) größer ist als der Strömungsnutzraum (2).

Fig. 5 zeigt eine Flachdichtung (l6) mit Aussparungen entsprechend den Kanalbohrungen (7 bis l0) und entsprechend dem Strömungsnutzraum (2). Wichtig ist, daß die Flachdichtung (l6) allseitig etwas größer ist als die äußere Kontur der Membran (l5) und in diesen Bereichen überall dichtend aufliegt, damit die Membran (l5) gegen radialen Austritt fluider Mittel abgedichtet ist.

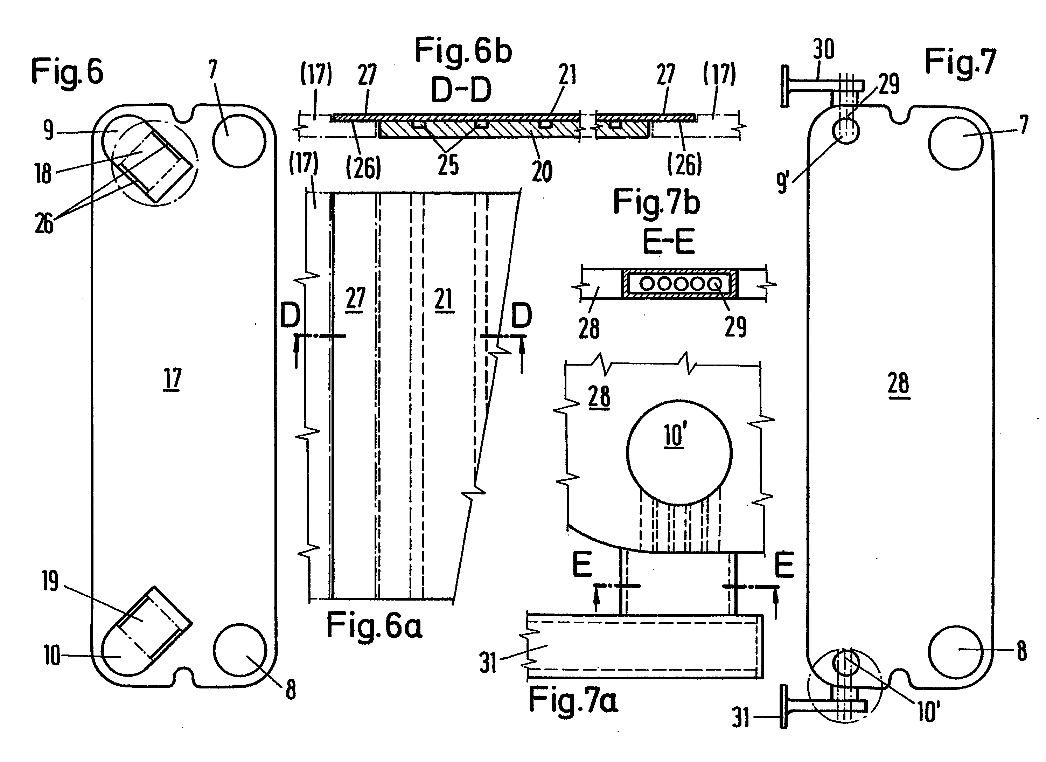

In Fig. 6 ist eine ebene, massive Platine (l7) dargestellt, die außer den Kanalbohrungen (7 bis l0) noch zwei Ausnehmungen (l8 und l9) im Anschluß an die Kanalbohrungen (9 und l0) mit Auflagen (26) aufweist. Die Ausnehmungen (l8 und l9) sind in zusammengebautem Zustand teilweise durch Kanalbleche (20, 2l) ausgefüllt (in Fig. 6 strichpunktiert dargestellt). Diese Kanalbleche bestehen gemäß Fig. 6a und 6b aus einem Bodenblech (20) mit eingearbeiteten Nuten (25) und einem Deckblech (2l). Die beiden Bleche sind miteinander verbunden und weisen die gleiche Dicke auf wie die Platine (l7). Die Kanalbleche werden mittels über die Bodenbleche (20) vorstehende Randstreifen (27) der Deckbleche (2l) in die Auflagen (26) der Platine eingepaßt.

Anschlußplatinen (28) gemäß Fig. 7 werden benötigt, wenn innerhalb des Stapels aus flächigen Bauteilen ein Fluid zu- oder abgeführt werden muß, denn die Kanäle entsprechend den Kanalbohrungen (7 bis l0) sind normalerweise nur am Anfang und Ende des Stapels zugänglich. Die Anschlußplatine (28) weist normale Kanalbohrungen (7 und 8) auf. Außerdem modifizierte Kanalbohrungen (9' und l0'), die über Kanäle (29) in der Ebene der Anschlußplatine (28) mit äußeren Anschlüssen (30 und 3l) in Verbindung stehen. Einzelheiten sind in den Figuren 7a und 7b vergrößert dargestellt und bedürfen keiner weiteren Erläuterung.

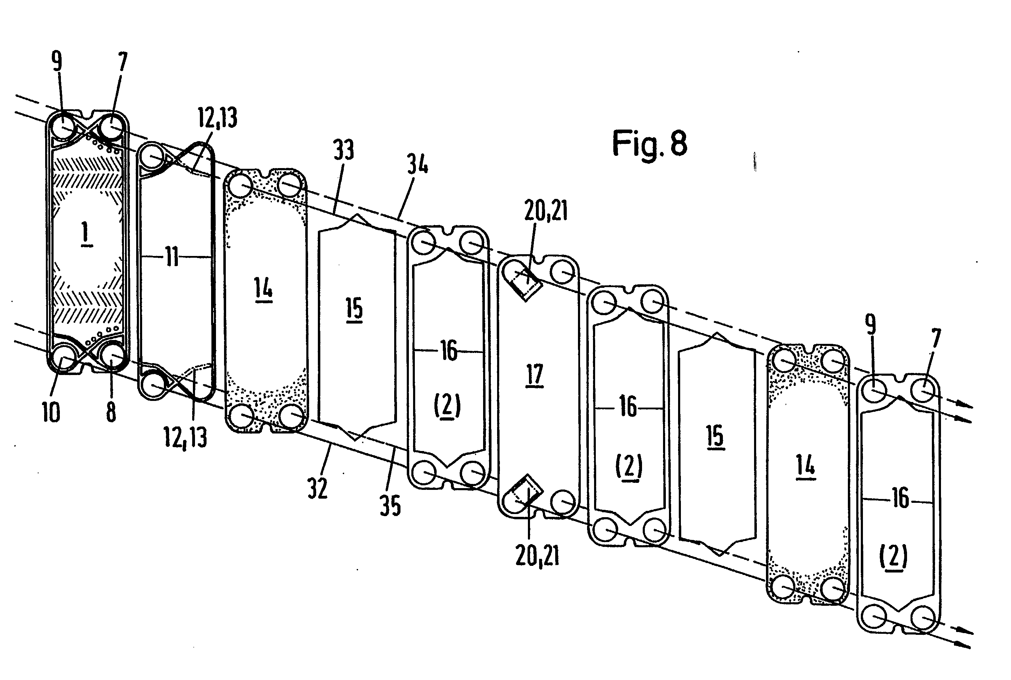

In Fig. 8 sind alle Bauteile eins Doppel-Moduls in funktioneller Anordnung hintereinander dargestellt, und zwar von links nach rechts: Platine (l), Dichtung (ll) (mit Kanalsteg), Siebblech (l4), Membran (l5), Flachdichtung (l6), Platine (l7), Flachdichtung (l6), Membran (l5), Sieb (l4), Flachdichtung (l6). Nach rechts schließen sich die Bauteile mit der Platine (l) beginnend in gleicher Reihenfolge je nach Bedarf einmal oder mehrmals wiederholend an. Eine Vorrichtung mit derartigen Modulen wird zur Abtrennung einer Komponente aus einem strömenden fluiden Gemisch folgendermaßen betrieben.

Über die Leitung (32), gebildet aus den Kanalbohrungen (l0), wird das Gemisch der Platine (l7) zugeführt und über das Kanalblech (20, 2l) auf beiden Seiten der Platine (l7) nach innen in Richtung auf die Strömungsnutzräume (2) verteilt. Letztere werden zwischen der Platine (l7) und den beidseitig jeweils im Anschluß an die Flachdichtung (l6) aufgelegten und durch die Siebbleche (l4) abgestützten Membranen (l5) gebildet. Die Membranen (l5) sind für eine Komponente des fluiden Gemisches durchlässig, die bei der Pervaporation auf deren Rückseite dampfförmig anfällt (Permeat), während der Rest des fluiden Gemisches (Retentat) über das obere Kanalblech (20, 2l) in die Leitung (33), gebildet aus den Kanalbohrungen (9) abfließt. Das Permeat wird nach Durchtritt durch die Siebbleche (14) in den Strömungsnutzräumen (2) auf der Vorder- und Rückseite der Platinen (I) gesammelt und als Dampf oben wie unten durch die Kanalstege (I2) in die Leitungen (34 und 35), gebildet aus den Kanalbohrungen (7 und 8), abgeführt.

Die Bauteileanordnung gemäß Fig. 8 wird Doppel-Modul genannt, weil die Gemischzuführung über die Platine (27) auf zwei Membranen (I5) erfolgt. Je einer Platine (I) oder (I7) sind also zwei Membranen (I5) zuzuordnen, wobei sich eine sehr kompakte und wirtschaftliche Bauweise ergibt.

Zu bemerken ist noch, daß alle Membranen (I5) und damit auch alle Platinen (I und I7) strömungstechnisch parallel geschaltet sind. Auf diese Weise können Vorrichtungen mit sehr großer Trennkapazität in einem Stapel vereinigt werden. Andererseits ist es aber unter Verwendung der Anschlußplatinen (28) auch möglich, in einem einzigen Stapel mehrere Funktionen zu realisieren.

So kann man beispielsweise einen Stapel als zweistufige Trennvorrichtung mit Zwischenerwärmung des fluiden Gemisches ausbilden, indem das Retentat aus der Leitung (23) nach außen abgeführt und nach externer Aufheizung über die Leitung (32) in den zweiten Teil der Trennvorrichtung wieder aufgegeben wird.

Man kann einen Stapel mittels der Anschlußplatinen (28) auch als Trennvorrichtung mit integriertem Kondensator ausbilden, indem das Retentat nach Durchlauf einer vorgegebenen Anzahl von Modulen oben abgeführt wird und der zweite Teil des Stapels mit üblichen Platinen als Wärmetauscher zur Kondensation des Permeats dient, wobei ein Kühlmittel unten an der Anschlußplatine (28) zu- oder abgeführt werden kann.

Die Verwendung des erfindungsgemäßen Doppel-Moduls ist daher nicht nur sehr platzsparend und wirtschaftlich, sie erlaubt in Verbindung mit der Anschlußplatine (28) auch eine sehr flexible Anpassung der Vorrichtung an die verschiedensten Bedürfnisse bei der Abtrennung einzelner Komponenten aus strömenden fluiden Gemischen mittels selektiv durchlässigem, flächigem Material.

## Patentansprüche

1. Vorrichtung zur Abtrennung einzelner Komponenten aus strömenden fluiden Gemischen mittels selektiv durchlässigem, flächigem Material durch Pervaporation, Gaspermeation, Umkehrosmose oder Ultrafiltration, bestehend im wesentlichen aus einem unter Verwendung handelsüblicher Platinen von Plattenwärmetauschern aufgebauten Stapel von im wesentlichen rechteckigen und in ihrer äußeren Kontur übereinstimmenden, flächigen Bauteilen, die mittels Zugankern zwischen End-Platten randseitig abdichtend zusammengepreßt sind und die innenliegende flache Strömungsnutzräume sowie in den vier Eckbereichen liegende Zu- und Abfuhrkanäle aufweisen, dadurch gekennzeichnet, daß der Stapel eine Mehrzahl von Doppel-Modulen aufweist, wobei jeder Doppel-Modul eine handelsübliche Platine (1), eine handelsübliche Dichtung (11), ein Siebblech (14), eine Membran (15), eine Flachdichtung (16), eine massive, ebene Verteilerplatine (17), eine zweite Flachdichtung (16), eine weitere Membran (15), ein weiteres Siebblech (14) und eine dritte Flachdichtung (16) hintereinander angeordnet aufweist und

a) die handelsübliche Platine (1) eines Plattenwärmetauschers mit einem Strömungsnutzraum (2), der von einer umlaufenden Dichtungssicke (3) begrenzt ist und eine Riffelprägung (4) mit beidseitig von oben nach unten durchgehenden Halb-Kanälen (5) aufweist sowie mit einer Mehrzahl von Durchbrüchen (6) im Strömungsnutzraum (2) jeweils in der Nähe einer oberen und einer unteren Kanalbohrung (7, 8) versehen ist,

b) in der umlaufenden Dichtungssicke (3) die handelsübliche Dichtung (11) sowie in der Dichtungssicke (3) der Platine (1) zwischen den Durchbrüchen (6) und den Kanalbohrungen (7, 8) ein Kanalsteg (12) mit Flachdichtung (13) angeordnet ist,

c) das Siebblech (14) die gleiche äußere Kontur und die gleichen Kanalbohrungen (7 bis 10) wie die Platine (1) besitzt,

d) die Membran (15) aus selektiv durchlässigem Material besteht und allseitig um mindestens die Breite der Dichtungssicke (3) größer ist als der Strömungsnutzraum (2),

e) die Flachdichtung (16) die gleiche äußere Kontur wie die Platine (1) und Aussparungen entsprechend dem Strömungsnutzraum (2) und den Kanalbohrungen (7 bis 10) aufweist und

f) die ebene, massive Verteilerplatine (17) Kanalbohrungen (7 bis 10) wie die Platine (1) sowie zusätzliche, sich an je eine obere und untere Kanalbohrung (9 und 10) anschließende Ausnehmungen (18, 19), die teilweise durch Kanalbleche (20, 21) ausgefüllt sind, aufweist.

2. Vorrichtung nach Anspruch 1, dadurch gekennzeichnet, daß der Kanalsteg (12) aus einem Blechstreifen (22) besteht, der auf einer Seite senkrecht zu seiner Längserstreckung eine Mehrzahl von halbkreisförmigen Ausnehmungen (23) aufweist.

3. Vorrichtung nach Anspruch 1, dadurch gekennzeichnet, daß die Kanalbleche aus einem Bodenblech (20) mit eingearbeiteten Nuten (25) und einem Deckblech (21) bestehen, die miteinander verbunden sind und die gleiche Dicke wie die Verteilerplatine (17) aufweisen.

4. Vorrichtung nach Anspruch 1, dadurch gekennzeichnet, daß in einem Doppel-Modul eine Anschlußplatine (28) mit der gleichen äußeren Kontur und einer oberen und unteren Kanalbohrung (7, 8) wie die übrigen Bauteile vorgesehen ist und die Anschlußplatine außerdem je eine obere und untere Kanalbohrung (9' und 10) aufweist, die über nach außen führende Kanäle (29) in der Ebene der Anschlußplatine (28) mit äußeren Anschlüssen (30, 31) in Verbindung stehen.

## Claims

1. Apparatus for the separation of individual constituents of flowing fluid mixtures by means of selectively permeable laminar material by pervaporation, gas permeation, reverse osmosis or ultra-filtration, consisting substantially of a stack of substantially rectangular laminar components of matching outer contours which is built up using commercially available blanks of plate heat exchangers, which components are pressed together between end plates by means of tie rods so as to be sealed at the edges and which have internal flat flow spaces and inlet and outlet channels located in the four corner regions, characterised in that the stack has a plurality of double modules, each double module having a commercially available blank (1), a commercially available sealing means (11), a sieve plate (14), a membrane (15), a flat gasket (16), a planar solid distributor blank (17), a second flat gasket (16), another membrane (15), another sieve plate (14) and a third flat gasket (16) arranged one behind the other, and

    a) the commercially available blank (1) of a plate heat exchanger is provided with a flow space (2) which is delimited by a surrounding sealing bead (3) and has a corrugated embossed region (4) with half-channels (5) on both sides which are continuous from top to bottom and with a plurality of holes (6) in the flow space (2) each in the vicinity of an upper and a lower channel bore (7, 8),

    b) the commercially available sealing means (11) is arranged in the surrounding sealing bead (3) and a channel crosspiece (12) with a flat gasket (13) is arranged in the sealing bead (3) of the blank (1) between the holes (6) and the channel bores (7, 8),

    c) the sieve plate (14) has the same outer contour and the same channel bores (7 to 10) as the blank (1),

    d) the membrane (15) is made of selectively permeable material and is larger on all sides than the flow space (2) by at least the width of the sealing bead (3),

    e) the flat gasket (16) has the same outer contour as the blank (1) and has recesses corresponding to the flow space (2) and the channel bores (7 to 10) and

    f) the flat, solid distributor blank (17) has channel bores (7 to 10) like the blank (1) and additional recesses (18, 19) connected in each case to an upper and lower channel bore (9 and 10), which recesses are partly filled by metal channel sheets (20, 21).

2. Apparatus according to claim 1, characterised in that the channel crosspiece (12) consists of a sheet metal strip (22) which has a plurality of semicircular recesses (23) on one side perpendicular to the longitudinal extension thereof.

3. Apparatus according to claim 1, characterised in that the channel plates consist of a base plate (20) with grooves (25) incorporated and a cover plate (21) which are connected together and have the same thickness as the distributor blank (17).

4. Apparatus according to claim 1, characterised in that a connection blank (28) having the same outer contour and upper and lower channel bore (7, 8) as the other components is provided in a double module and the connection blank furthermore has one upper and lower channel bore (9' and 10) each, which are connected to external connections (30, 31) through outward-leading channels (29) in the plane of the connection blank (28).

## Revendications

1. Installation de séparation des constituants de mélanges fluides en écoulement, au moyen de matériau plat et perméable sélectivement par évaporation à travers une membrane, par perméation de gaz, par osmose inverse ou par ultrafiltration, constituée essentiellement d'un empilement, formé en utilisant des plaques, usuelles dans le commerce d'échangeurs de chaleur à plaques, d'éléments constitutifs plats, sensiblement rectangulaire, dont les contours extérieurs coïncident, et qui sont pressés les uns contre les autres et rendus étanches sur les bords entre les plaques d'extrémité au moyen de tirants, et qui comportent des volumes utiles pour l'écoulement, plats et se trouvant à l'intérieur, ainsi que, aux quatre sommets, des canaux d'admission et d'évacuation, caractérisée en ce que l'empilement comporte plusieurs modules doubles, chaque module double comportant, montées les unes derrière les autres, une plaque (1) usuelle dans le commerce, une garniture (11) usuelle dans le commerce, une tôle-tamis (4), une membrane (15), une garniture d'étanchéité (16) plate, une plaque de répartition pleine et plane, une deuxième garniture d'étanchéité (16) plate, une autre membrane (15), une autre tôle-tamis (14) et une troisième garniture d'étanchéité (11) plate et

    a) la plaque (1) usuelle dans le commerce d'un échangeur de chaleur à plaques est munie d'un volume utile pour l'écoulement (2), qui est délimité par une moulure d'étanchéité (3) en faisant tout le tour et comporte un estampage de striures (4) avec des deux côtés des demi-canaux (5) continus de haut en bas, ainsi que plusieurs passages (6) dans le volume utile pour l'écoulement (2) respectivement à proximité d'un perçage supérieur (7) et inférieur (8) de canalisation,

    b) dans la moulure d'étanchéité (3) faisant tout le tour sont montées la garniture d'étanchéité (11) usuelle dans le commerce, ainsi que, dans la moulure d'étanchéité (3) de la plaque (1) entre les passages (6) et les perçages de canalisation (7, 8), une barrette de canalisation (12) ayant une garniture d'étanchéité (13) plate,

    c) la tôle-tamis (14) a le même contour extérieur et les mêmes perçages de canalisation (7 à 10) que la plaque (1),

    d) la membrane (15) est en un matériau perméable sélectivement et est plus grande, de tout côté, d'au moins la largeur de la moulure d'étanchéité (3), que le volume utile pour l'écoulement (2),

    e) la garniture d'étanchéité (16) plate possède le même contour extérieur que la plaque (1) et comporte des évidements correspondant au volume utile pour l'écoulement (2) et aux perçages de canalisation (7 à 10), et

    f) la plaque de répartition (17) plane et pleine comporte des perçages de canalisation (7 à 10) comme la plaque (1), ainsi que des évidements (18, 19) supplémentaires qui se raccordent respectivement à un perçage supérieur de canalisation (9) et à un perçage inférieur de canalisation (10) et qui sont garnis partiellement de tôle de canalisation (20, 21).

2. Installation suivant la revendication 1, caractérisée en ce que la barrette de canalisation (12) est constituée d'une bande de tôle (22) qui comporte, sur un côté perpendiculaire à son étendue longitudinale, plusieurs évidements (23) hémi-circulaires.

3. Installation suivant la revendication 1, caractérisée en ce que les tôles de canalisation sont constituées d'une tôle de fond (20), dans laquelle sont usinées des gorges (25) et d'une tôle de couverture (21), qui sont reliées entre elles et qui ont la même épaisseur que la plaque de répartition (17).

4. Installation suivant la revendication 1, caractérisée en ce que, dans un module double, est prévue une plaque de raccordement (28) ayant le même contour extérieur et les mêmes perçages supérieur (7) et inférieur (8) de canalisation que les autres éléments constitutifs, et la plaque de raccordement comporte en outre respectivement un perçage de canalisation supérieur (9') et inférieur (10), qui communiquent par des canaux (29) menant à l'extérieur et se trouvant dans le plan de la plaque de raccordement (28), avec des raccords extérieurs (30, 31).

Fig.1

Fig.1a
A-A

Fig.2a
B-B

Fig.2b
C-C

Fig.2

EP 0 231 558 B1

Fig.3

Fig.4

Fig.5

Fig.7

Fig.7a

Fig.7b
E-E

Fig.6b
D-D

Fig.6a

Fig.6

Fig. 8

EP 0 231 558 B1